# EUROPEAN PATENT SPECIFICATION

(11) **EP 1 798 913 B1**
(45) Date of publication and mention of the grant of the patent: **02.05.2012**
(21) Application number: 06025975.1
(22) Date of filing: 14.12.2006
(51) Int. Cl.: H04W 12/04, H04W 28/10, H04W 80/06, H04L 12/56

(54) **Transport control method in wireless communication system**
Transportsteuerverfahren in einem drahtlosen Kommunikationssystem
Procédé de commande du transport dans un système de communication sans fil

(30) Priority: 14.12.2005 KR 20050123484
(43) Date of publication of application: 20.06.2007
(73) Proprietor: Samsung Electronics Co., Ltd., Suwon-si, Gyeonggi-Do (KR)
(72) Inventor: Hyon, Tae-In, c/o Samsung Elec. Co., Ltd., Suwon-si, Gyeonggi-do (KR); Yun, Sang-Boh, c/o Samsung Elec. Co., Ltd., Suwon-si, Gyeonggi-do (KR); Kim, Hoon, c/o Samsung Elec. Co., Ltd., Suwon-si, Gyeonggi-do (KR)
(74) Representative: Grünecker, Kinkeldey, Stockmair & Schwanhäusser

(56) References cited:
- US-A1- 2002 031 088
- US-A1- 2003 212 816
- LEFEVRE F ET AL: "Understanding TCP's behavior over wireless links" COMMUNICATIONS AND VEHICULAR TECHNOLOGY, 2000. SCVT-200. SYMPOSIUM ON OCT 19, 2000, PISCATAWAY, NJ, USA,IEEE LNKD- DOI:10.1109/SCVT.2000.923350, 1 January 2000 (2000-01-01), pages 123-130, XP010542742 ISBN: 978-0-7803-6684-8
- HARI BALAKRISHNAN ET AL: "A Comparison of Mechanisms for Improving TCP Performance over Wireless Links" IEEE / ACM TRANSACTIONS ON NETWORKING, IEEE / ACM, NEW YORK, NY, US, vol. 5, no. 6, 1 December 1997 (1997-12-01), XP011039100 ISSN: 1063-6692
- BOGGIA G ET AL: "A Cross-layer Approach to Enhance TCP Fairness in Wireless Ad-hoc Networks" WIRELESS COMMUNICATION SYSTEMS, 2005. 2ND INTERNATIONAL SYMPOSIUM ON SIENA, ITALY 05-09 SEPT. 2005, PISCATAWAY, NJ, USA,IEEE, PISCATAWAY, NJ, USA LNKD- DOI:10.1109/ISWCS.2005.1547751, 5 September 2005 (2005-09-05), pages 498-502, XP010886302 ISBN: 978-0-7803-9206-9
- KOIKE A: "Active TCP control by a network" 19991205; 19991205 - 19991209, vol. 3, 5 December 1999 (1999-12-05), pages 1921-1925, XP010373749

## Description

### BACKGROUND OF THE INVENTION

### 1. Field of the Invention

The present invention relates generally to a wireless communication system, and in particular, to a transport control method for increasing throughput of a wireless communication system through an interoperation between a medium access control (MAC) layer and a transport layer.

### 2. Description of the Related Art

A transmission control protocol (TCP) is designed to guarantee reliable data transmission in a wired Internet network. However, when the TCP is applied to a wireless network, throughput as in the wired network cannot be expected due to a burst error characteristic of a wireless link.

Since this burst error characteristic is similarly applied to an acknowledgement (ACK) message transmitted by a receiver to a transmitter responsive to a received packet, when an upper layer application requiring the same reliability as that of a file transmission control protocol (FTP) is served, a congestion control mechanism based on retransmission according to an ACK delay is frequently operated in the TCP. The frequent operation of the congestion control mechanism causes an increase in the number of packet retransmissions, thereby degrading system throughput.

An indirect TCP mechanism has been suggested to solve this problem. In the indirect TCP mechanism, flow and congestion control functions in a wireless link and a wired link can be separated by discriminating wireless TCP connection from wired TCP connection. However, the principal purpose of the TCP, i.e., the guarantee of end-to-end connection, disappears.

A snooping agent TCP mechanism has been suggested as an alternative for realizing the TCP in a wireless link. In the snooping agent TCP mechanism, a snooping agent is installed in a remote node and buffers a segment transmitted to a wireless terminal through a downstream link. If an ACK is not received, the snooping agent retransmits the segment to the wireless terminal. In the case of an upstream link, the snooping agent examines a sequence number of a segment received from the wireless terminal and requests the wireless terminal for retransmission of a segment of which transmission has failed using a selective repeat request algorithm. However, in the snooping agent TCP mechanism, since the snooping agent must have TCP stacks for every terminal and a memory for storing segments, it is very complicated and there are many overheads to implement the snooping agent TCP mechanism.

US 2003/0212816 A1 refers to a method and apparatus for controlling flow of data in a communication system. For more efficiently using communication resources in the communication system, delay of a TCP acknowledgement message is controlled, wherein the TCP acknowledgement message refers to the reception of data from one communication protocol layer to another. The delay of the TCP acknowledgement message and the message may be controlled to effect an efficient and consistent flow of data from a source and to a destination end, in particular in case of encrypted communications. In case of encrypted communications, the delay of both the acknowledgement message and the message may be controlled. When controlling flow of data in a communication system, an acknowledgement message is received for indicating reception of a packet of data at a destination. Statistical mean and variants of delay of a plurality of acknowledgement messages are determined associated with a corresponding plurality of packets of data, wherein the delay is a time period between transmitting the packet of data and the receiving of the acknowledgment. Then a delay period is determined based on the statistical mean and variants of delay. Finally, the passing of the received acknowledgement message is delayed for a period of time substantially equal to the determined delay period.

US 2002/0031088 A1 refers to a method for explicit data rate control in a packet communication environment without data rate supervision. The method is introduced into a packet communication environment which does not have data rate supervision by adding latency to the acknowledgement packet and by adjusting the size of the flow control window associated with the packet in order to directly control the data rate of the source data at stations originating the packet.

The publication title "Understand TCP's behavior over wireless links" by Lefevre F. et al, communications and vehicular technology, 2000, symposium on October 19, 2000, pages 123 to 130, ISBN: 978-0-7803-6684-8 refers to transmission control protocol, TCP and discloses that some adaptations are necessary in order to be efficient on a wireless interface which characteristics differ very much from the usual wired networks. A missing packet means in most cases that the network is congested and in reaction, TCP triggers the congestion algorithm aimed to reducing throughput. In a wireless network, however, packet losses occur more frequently due to link error because of the unreliability of the physical link. This implies the unnecessary invocation of the congestion algorithm. Moreover, this reduces the throughput drastically and causes severe performance degradation.

The publication titled "A comparison of Mechanisms for improving TCP performance over wireless links" by Hari Balakrishnan et al, IEEE/ACM Transaction on Networking, volume 5, no. 6, dated December 1, 1997, describes that networks with wireless and other lossy links suffer from significant losses due to bit errors and handoffs. TCP response to all losses by invoking congestion control and avoidance algorithms, resulting in degraded end-to-end performance in wireless and lossy systems. Several schemes are compared that are designed to improve the performance of TCP in such networks. These schemes are classified into three broad categories: end-to-end protocols, where loss recovery is performed by the sender; link layer protocols that provide local reliability; and split-connection protocols that break the end-to-end connection into two parts at the base station. A reliable link layer protocol that is TCP-aware provides very good performance, where it is possible to achieve good performance without splitting the end-to-end connection at the base station. It has been demonstrated that selective acknowledgements and explicit loss notifications result in significant performance improvements.

The publication titled "A cross-layer approach to enhance TCP fairness in wireless ad-hoc networks" by G. Boggia. et al, dated September 5, 2005, pages 498 to 502, ISBN: 978-0-7803-9206-9 proposes a cross-layer algorithm that dynamically limits the number of in flight segments in a TCP connection by taking into account measurements of frame collision probability, collected at the MAC layer along the path. Performance of the proposed algorithm have been evaluated by simulations, where results show that the developed cross-layer scheme provides the same goodput, improves fairness in bandwidth sharing, and reduces segment retransmission rations with respect to the standard TCP over 802.11 MAC.

The publication titled "Active TCP control by a network" by Koike Arata, dated December 5, 1999, volume 3, pages 1921 to 1925 refers to the potential role of a network in improving end-to-end TCP control. A method is proposed for adjusting an ACK interval based on network information. Special focus is given to a scenario in which networks with different speeds are interconnected at a router. Simulation based on an interworking algorithm showed a good end-to-end TCP performance as to fairness between multiple TCP connections.

EP 1 077 559 A1 refers to a method and device for determining a time-parameter.

WO 01/13587 A2 refers to a method and device for determining a time-parameter.

US 2004/0030790 A1 refer to a data communication network, system and transmitter and receiver constituting the system.

US 2005/0226239 A1 refers to optimizing IEEE 802.11 for TCP/IP data transfer.

### SUMMARY OF THE INVENTION

An aspect of the present invention is to substantially solve at least the above problems and/or disadvantages as well as to provide at least the set forth advantages below. Accordingly, it is the object of the present invention to provide an improved transport control method for minimizing degradation of transmission throughput according to the characteristics of a wireless link in a wireless communication system using a transport layer protocol having a congestion control function.

This object is solved by the subject matter of the independent claims.

Preferred embodiments are defined by the dependent claims.

Another aspect of the present invention is to provide a transport control method for improving TCP throughput by reducing the number of retransmission timeout (RTO) reestablishments by means of a MAC layer controlling ACK transport in response to a TCP segment considering a TCP RTO timer in a wireless communication system using a TCP as a transport layer protocol.

According to one aspect of the present invention, there is provided a transport control method in a transmitter of a wireless communication system, which has a transport layer having a congestion control function for transmitting data in a segment basis and retransmitting a segment if an RTO timer expires before an ACK segment is received in response to transmission of the segment and a MAC layer for detecting an ACK segment received through a wireless link and then transporting the detected ACK segment to the transport layer. The transport control method including temporarily storing received ACK segments in the MAC layer; detecting an average transmission rate of data segments; and transporting the stored ACK segments to the transport layer at the average transmission rate.

According to still another aspect of the present invention, there is provided a transport control method including the steps of performing a flow control of received ACK segments in a MAC layer; transporting at least one of the flow-controlled ACK segments to a transport layer; and resetting an RTO timer according to the ACK segment received from the MAC layer in the transport layer.

According to yet still another aspect of the present invention, there is provided a transport control method in a transmitter of a wireless communication system, which has a TCP layer for performing a congestion control using an RTO timer and a MAC layer for detecting an ACK segment received in response to a data segment transmitted by the TCP layer and transporting the detected ACK segment to the transport layer, the transport control method including of performing a flow control of the received ACK segment in a MAC layer; and resetting the RTO timer according to the ACK segment received from the MAC layer in the TCP layer.

### BRIEF DESCRIPTION OF THE DRAWINGS

The above and other objects, features and advantages of the present invention will become more apparent from the following detailed description when taken in conjunction with the accompanying drawings in which:
FIG. 1 is a schematic configuration illustrating a wireless communication system using a transport control method according to the present invention;
FIG. 2 is a flowchart illustrating a transport control method according to the present invention;
FIG. 3 is a conceptual diagram for explaining an ACK processing process of a MAC layer in a transport control method according to the present invention; and
FIG. 4 is a conceptual diagram for explaining a process of setting TCP_RTO in a transport control method according to the present invention.

### DETAILED DESCRIPTION OF THE PREFERRED EMBODIMENT

Preferred embodiments of the present invention will be described herein below with reference to the accompanying drawings.

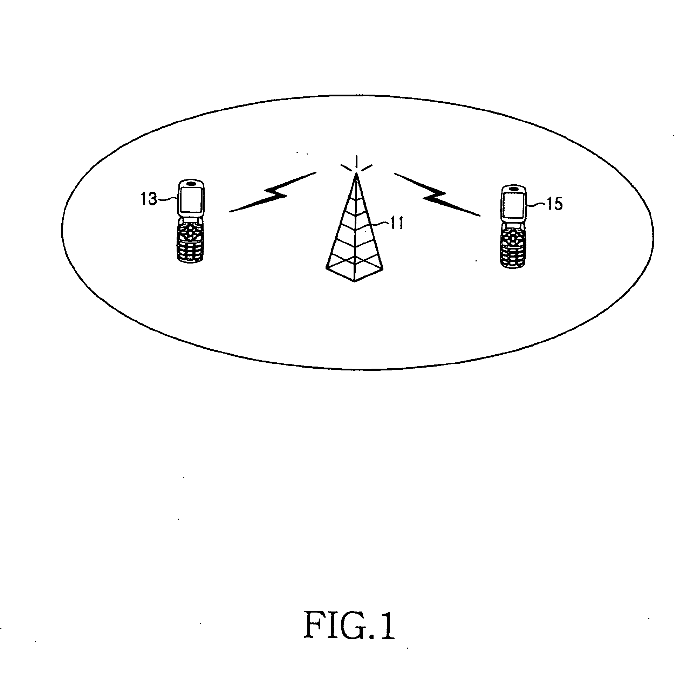

FIG. 1 is a schematic configuration illustrating a wireless communication system using a transport control method according to a preferred embodiment of the present invention. FIG. 1 illustrates a communication environment supporting end-to-end communication between terminals through a remote node 11 forming a wireless link with each of two terminals 13 and 15 located in a coverage area thereof.

In the transport control method according to the present invention, a MAC layer of a transmission terminal appropriately maintains an RTO value, which is a parameter used for a congestion control mechanism of a TCP layer, by checking the RTO value and controlling transport of ACK messages received from a reception terminal to the TCP layer considering the RTO value. In other words, even if the transmission terminal burstily receives ACK messages in response to TCP segments, the transmission terminal can prevent a decrease of an entire transmission rate due to frequent RTO initialization by reducing the number of RTO expirations by controlling an ACK transport rate from the MAC layer to the TCP layer.

For simplicity of description, an RTO value of the TCP layer is called a TCP_RTO value, and a parameter value set based on the TCP_RTO value in the MAC layer is called a MAC_RTO value.

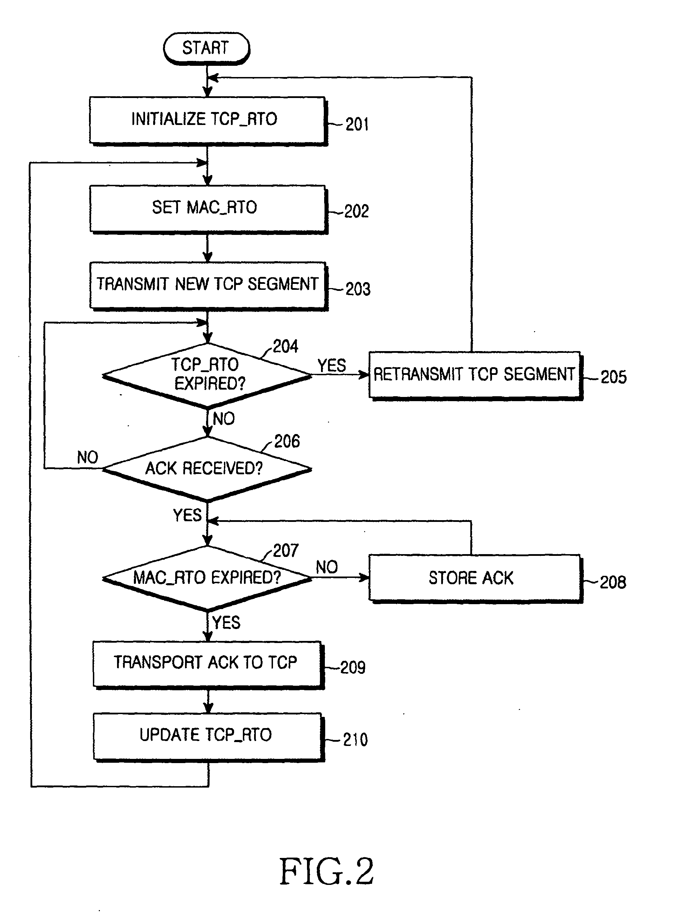

FIG. 2 is a flowchart illustrating a transport control method according to the present invention. Referring to FIG. 2, when a TCP_RTO value is initialized in a transmitter in step 201, the transmitter sets a MAC_RTO value according to the initial TCP_RTO value in step 202 and transmits a TCP segment in step 203. After transmitting the TCP segment, the transmitter determines in step 204 whether the TCP_RTO value has expired.In step 204,,if the TCP_RTO value has expired before an ACK message in response to the TCP segment is received, the transmitter retransmits the TCP segment in step 205 and initializes the TCP_RTO value again.

If the TCP_RTO value has not expired, the transmitter determines in step 206 whether the ACK message in response to the TCP segment is received, and if the ACK message is received, the transmitter determines in step 207 whether the MAC_RTO value has expired. If the MAC_RTO value has not expired, the transmitter stores the ACK message in a buffer in step 208 and waits until the MAC_RTO value expires. If the MAC_RTO value has expired, the transmitter transports the stored ACK message to the TCP layer in step 209 and updates the TCP_RTO value in step 210. Then, the transmitter sets the MAC_RIO value according to the updated TCP_RTO value.

As is well known, since the TCP congestion control mechanism uses a slow start function in general, when the TCP_RTO value is initialized, data transmission begins again at the lowest transmission rate. Thus, if the TCP_RTO value is frequently initialized, system throughput decreases.

As in step 208, even if an ACK message is received in a burst by the receiver, since the MAC layer transports the ACK message to the TCP layer not immediately but at the MAC_RTO expiration time set to the time right before the TCP_RTO value expires, the TCP_RTO value can be prevented from expiring in an earlier time. By doing this, frequent transmission rate initialization due to the TCP_RTO expiration can be prevented, and a sufficient time can be granted to ACK messages to be received.

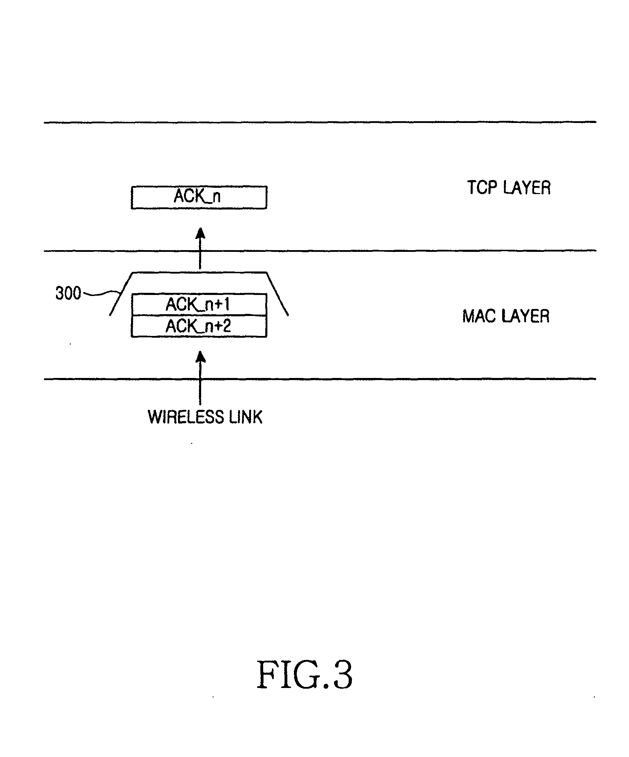

FIG. 3 is a conceptual diagram for explaining an ACK processing process of a MAC layer in a transport control method according to a the present invention.

Referring to FIG. 3, when *ACK_n, ACK_n*+1, and *ACK_n*+2 messages are received in series, the MAC layer transports only the *ACK_n* message to a TCP layer at a MAC_RTO expiration time by referring to a MAC_RTO value for the *ACK_n* message and temporarily stores the *ACK_n*+1 and *ACK_n*+2 messages. The TCP layer, which has received the *ACK_n* message, resets a TCP_RTO value, and the MAC layer sets the MAC_RTO value to a value less than the reset TCP_RTO value and transports the *ACK_n*+1 message or the *ACK_n*+1 and *ACK_n*+2 messages to the TCP layer at the MAC_RTO expiration time. The number of ACK messages transported to the TCP layer is determined by temporal average throughput and long term nominal throughput.

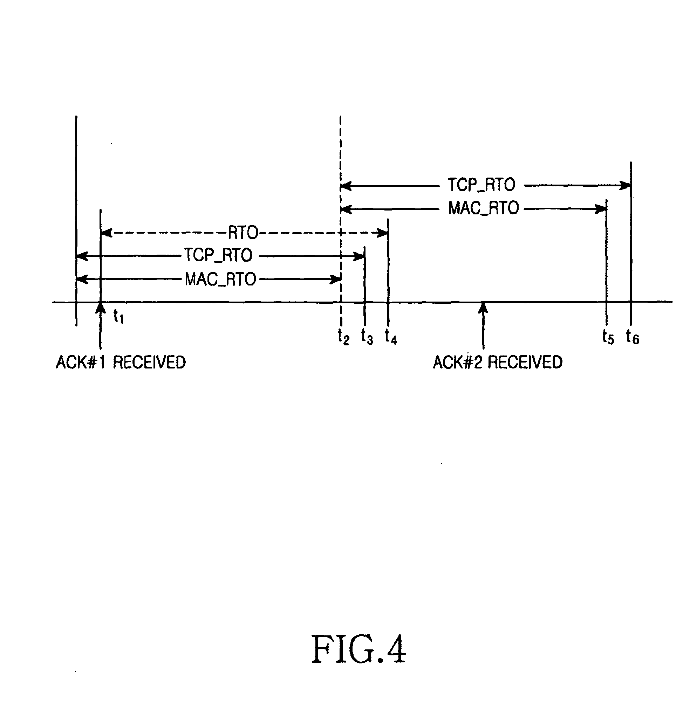

FIG. 4 is a conceptual diagram for explaining a process of resetting TCP_RTO in a transport control method according to the present invention. Referring to FIG. 4, if an expiration time of the TCP_RTO value is t3 and an *ACK#*1 message is received at *t*1, in the conventional TCP, a MAC layer transports the *ACK*#1 message to a TCP layer at *t*1. The TCP layer, which has received the *ACK#*1 message, resets the RTO value at *t*1, and an expiration time of the reset RTO value becomes *t*4.

However, in the transport control method , even if the *ACK#*1 message is received at *t*1, a MAC layer waits until *t*2, which is an expiration time of a MAC_TRO value set by referring to the TCP_RTO value and transports the *ACK*#1 message to a TCP layer at *t*2, without immediately transporting the *ACK#*1 message to the TCP layer. Thus, the TCP layer resets the TCP_RTO value to the MAC_TRO expiration time *t*2, which is the time when the *ACK#*1 message is transported, and thus, an expiration time of the reset TCP_RTO value becomes *t*6, and an expiration time of the MAC_TRO value becomes *t*5.

In the conventional TCP, since the RTO value expires at *t*4, if an *ACK#2* message is received a certain time between *t*4 and *t*5 , a relevant TCP segment is retransmitted, and a transmission rate is initialized. However, in the transport control method according to the present invention since the TCP_RTO value is expanded to *t*5, retransmission does not occur.

As described above, in a transport control method according to the present invention, by controlling an upward transport rate of a received ACK message by referring to an RTO value of a TCP in a MAC layer, unnecessary retransmission can be prevented by a congestion control function. In addition, by reducing the number of RTO expirations, frequent transmission rate initialization can be prevented, thereby improving system throughput.

Further, by expanding an RTO resetting time to a MAC_RTO expiration time rather then the time when an ACK message is received, an ACK loss due to a delay, which can be generated by a burst characteristic of a wireless link, can be prevented.

While the present invention has been shown and described with reference to a certain preferred embodiment thereof, it will be understood by those skilled in the art that various changes in form and details may be made therein without departing from the scope of the present invention as defined by the appended claims.

## Claims

1. A transport control method performed by a transmitter of a wireless communication system, the transmitter comprising a transport layer, wherein the transport layer has a congestion control function for transmitting data in a segment basis and retransmitting a segment if a retransmission timeout, RTO, timer expires before receipt of an acknowledgement, ACK, segment in response to transmission of the segment and a medium access control, MAC, layer for detecting receipt of an ACK segment received through a wireless link and transporting, by the transmitter, the detected ACK segment to the transport layer, the transport control method comprising the steps of:
performing a flow control of received ACK segments in the MAC layer of the transmitter;
transporting at least one of the flow-controlled ACK segments to the transport layer; and
resetting a RTO timer according to the ACK segment received from the MAC layer in the transport layer,
wherein performing the flow control comprises:
temporarily storing (208) received ACK segments in the MAC layer;
detecting an average transmission rate of data segments; and
transporting (209) the stored ACK segments to the transport layer at the average transmission rate.

2. The transport control method of claim 1, wherein performing the flow control, further comprises:
setting (202) a transport timer of the MAC layer based on the RTO timer;
determining (204) whether the transport timer has expired; and
determining an expiration time of the transport timer as the time when the ACK segment is transported.

3. The transport control method of claim 2, wherein the expiration time of the transport timer is earlier than an expiration time of the RTO timer.

4. The transport control method of claim 3, wherein the RTO timer is reset at the time when the transport timer expires.

5. The transport control method of claim 1, wherein said congestion control function is performed by a transmission control protocol, TCP, layer by using the RTO timer and wherein the MAC layer performs the detection of the ACK segment in response to the data segment transmitted by the TCP layer.

6. The transport control method of claim 5, wherein performing the flow control comprises:
detecting said average transmission rate of the TCP layer; and
transporting (209) the ACK segment to the TCP layer at the average transmission rate.

7. The transport control method of claim 6, wherein transporting the ACK segment comprises:
comparing a reception rate of the received ACK segment to the average transmission rate;
if the reception rate is greater than the average transmission rate, transporting ACK segments corresponding to the average transmission rate to the TCP layer and storing the remaining ACK segments; and
if the reception rate is less than the average transmission rate, transporting the stored ACK segments to the TCP layer.

8. The transport control method of claim 7, wherein transporting the stored ACK segments to the TCP layer comprises:
determining (204) whether a pre-set transport timer has expired; and
transporting (205) at least one of the stored ACK segments to the TCP layer at the time when the transport timer expires.

9. The transport control method of claim 8, wherein the transport timer expires earlier than the RTO timer.

10. A transmitter of a wireless communication system, the transmitter comprising a transport layer, wherein the transport layer has a congestion control function for transmitting data in a segment basis and retransmitting a segment if a retransmission timeout, RTO, timer expires before receipt of an acknowledgement, ACK, segment in response to transmission of the segment and further comprising a medium access control, MAC, layer for detecting receipt of an ACK segment through a wireless link and transporting, by the transmitter the detected ACK segment to the transport layer, wherein the transmitter comprises:
means for performing a flow control of received ACK segments in the MAC layer of the transmitter;
means for transporting at least one of the flow-controlled ACK segments to the transport layer; and
means for resetting a RTO timer according to the ACK segment received from the MAC layer in the transport layer,
wherein the means for performing the flow control comprises:
means for temporarily storing (208) received ACK segments in a MAC layer;
means for detecting an average transmission rate of data segments; and
means for transporting (209) the stored ACK segments to a transport layer at the average transmission rate.

11. The transmitter of claim 10 adapted to operate according to one of the method claims 2 to 9.

## Patentansprüche

1. Transportsteuerverfahren, das von einem Sender eines Drahtloskommunikationssystems durchgeführt wird, wobei der Sender umfasst:
eine Transportschicht, wobei die Transportschicht eine Überfüllungssteuerfunktion zum Senden von Daten auf Segmentbasis und Rücksenden eines Segmentes für den Fall eines Ablaufes eines RTO-Zeitgebers (Retransmission Timeout RTO; Rücksende-Timeout) vor Empfang eines ACK-Segmentes (Acknowledgement ACK; Bestätigung) in Reaktion auf das Senden des Segmentes aufweist, und
eine MAC-Schicht (Medium Access Control MAC, Mediumzugriffssteuerung) zum Erfassen eines Empfangs eines ACK-Segmentes aus dem Empfang durch eine Drahtlosverbindung und durch den Sender erfolgenden Transportieren des erfassten ACK-Segmentes zu der Transportschicht,
wobei das Transportsteuerverfahren die nachfolgenden Schritte umfasst:
Durchführen einer Ablaufsteuerung empfangener ACK-Segmente in der MAC-Schicht des Senders;
Transportieren von wenigstens einem der ablaufgesteuerten ACK-Segmente zu der Transportschicht; und
Zurücksetzen eines RTO-Zeitgebers entsprechend dem ACK-Segment aus dem Empfang von der MAC-Schicht in der Transportschicht,
wobei das Durchführen der Ablaufsteuerung umfasst:
vorübergehendes Speichern (208) empfangener ACK-Segmente in der MAC-Schicht; Erfassen einer Durchschnittssenderate von Datensegmenten; und
Transportieren (209) der gespeicherten ACK-Segmente zu der Transportschicht mit der Durchschnittssenderate.

2. Transportsteuerverfahren nach Anspruch 1, wobei das Durchführen der Ablaufsteuerung des Weiteren umfasst:
Einstellen (202) eines Transportzeitgebers der MAC-Schicht auf Grundlage des RTO-Zeitgebers;
Bestimmen (204), ob der Transportzeitgeber abgelaufen ist; und
Bestimmen einer Ablaufzeit des Transportzeitgebers als die Zeit, zu der das ACK-Segment transportiert wird.

3. Transportsteuerverfahren nach Anspruch 2, wobei die Ablaufzeit des Transportzeitgebers früher als eine Ablaufzeit des RTO-Zeitgebers ist.

4. Transportsteuerverfahren nach Anspruch 3, wobei der RTO-Zeitgeber zu der Zeit zurückgesetzt wird, zu der der Transportzeitgeber abläuft.

5. Transportsteuerverfahren nach Anspruch 1, wobei die Überfüllungssteuerfunktion von einer TCP-Schicht (Transmission Control Protocol TCP, Sendesteuerprotokoll) unter Verwendung des RTO-Zeitgebers durchgeführt wird und wobei die MAC-Schicht die Erfassung des ACK-Segmentes in Reaktion auf das von der TCP-Schicht gesendete Datensegment durchführt.

6. Transportsteuerverfahren nach Anspruch 5, wobei das Durchführen der Ablaufsteuerung umfasst:
Erfassen der Durchschnittssenderate der TCP-Schicht; und
Transportieren (209) des ACK-Segmentes zu der TCP-Schicht mit der Durchschnittssenderate.

7. Transportsteuerverfahren nach Anspruch 6, wobei das Transportieren des ACK-Segmentes umfasst:
Vergleichen einer Empfangsrate des empfangenen ACK-Segmentes mit der Durchschnittssenderate;
wenn die Empfangsrate größer als die Durchschnittssenderate ist, erfolgendes Transportieren von ACK-Segmenten entsprechend der Durchschnittssenderate zu der TCP-Schicht und Speichern der verbleibenden ACK-Segmente; und
wenn die Empfangsrate kleiner als die Durchschnittssenderate ist, erfolgendes Transportieren der gespeicherten ACK-Segmente zu der TCP-Schicht.

8. Transportsteuerverfahren nach Anspruch 7, wobei das Transportieren der gespeicherten ACK-Segmente zu der TCP-Schicht umfasst:
Bestimmen (204), ob ein voreingestellter Transportzeitgeber abgelaufen ist; und
Transportieren (205) von wenigstens einem der gespeicherten ACK-Segmente zu der TCP-Schicht zu der Zeit, zu der der Transportzeitgeber abläuft.

9. Transportsteuerverfahren nach Anspruch 8, wobei der Transportzeitgeber früher als der RTO-Zeitgeber abläuft.

10. Sender eines Drahtloskommunikationssystems, wobei der Sender umfasst:
eine Transportschicht, wobei die Transportschicht eine Überfüllungssteuerfunktion zum Senden von Daten auf Segmentbasis und Rücksenden eines Segmentes für den Fall eines Ablaufes eines RTO-Zeitgebers (Retransmission Timeout RTO; Rücksende-Timeout) vor Empfang eines ACK-Segmentes (Acknowledgement ACK; Bestätigung) in Reaktion auf das Senden des Segmentes aufweist, und
eine MAC-Schicht (Medium Access Control MAC, Mediumzugriffssteuerung) zum Erfassen eines Empfangs eines ACK-Segmentes durch eine Drahtlosverbindung und durch den Sender erfolgenden Transportieren des erfassten ACK-Segmentes zu der Transportschicht,
wobei der Sender umfasst:
Mittel zum Durchführen einer Ablaufsteuerung empfangener ACK-Segmente in der MAC-Schicht des Senders;
Mittel zum Transportieren von wenigstens einem der ablaufgesteuerten ACK-Segmente zu der Transportschicht; und
Mittel zum Zurücksetzen eines RTO-Zeitgebers entsprechend dem ACK-Segment aus dem Empfang von der MAC-Schicht in der Transportschicht,
wobei das Mittel zum Durchführen der Ablaufsteuerung umfasst:
Mittel zum vorübergehenden Speichern (208) empfangener ACK-Segmente in einer MAC-Schicht;
Mittel zum Erfassen einer Durchschnittssenderate von Datensegmenten; und
Mittel zum Transportieren (209) der gespeicherten ACK-Segmente zu der Transportschicht mit der Durchschnittssenderate.

11. Sender nach Anspruch 10, der dafür ausgelegt ist, nach einem der Verfahrensansprüche 2 bis 9 zu arbeiten.

## Revendications

1. Procédé de commande de transport mis en oeuvre par un émetteur d'un système de communication sans fil, l'émetteur comprenant une couche de transport, pour lequel la couche de transport est dotée d'une fonction de contrôle de congestion pour transmettre des données sur la base de segments et retransmettre un segment si une minuterie de temporisation de retransmission, RTO, expire avant la réception d'un segment d'accusé de réception, ACK, en réponse à la transmission du segment, et une couche de commande d'accès au support, MAC, pour détecter la réception d'un segment ACK reçu par une liaison sans fil et transporter, par l'émetteur, le segment ACK détecté à la couche de transport, le procédé de commande de transport comprenant les étapes consistant à :
- réaliser un contrôle de flux des segments ACK reçus dans la couche MAC de l'émetteur ;
- transporter au moins un des segments ACK, dont le flux a été contrôlé, à la couche de transport ; et
- remettre à zéro une minuterie RTO suivant le segment ACK reçu depuis la couche MAC dans la couche de transport,
- pour lequel la réalisation du contrôle de flux consiste à :
- stocker temporairement (208) les segments ACK reçus dans la couche MAC ;
- détecter un débit moyen de transmission des segments de données ; et
- transporter (209) les segments ACK stockés à la couche de transport au débit moyen de transmission.

2. Procédé de commande de transport selon la revendication 1, pour lequel la réalisation du contrôle de flux consiste en outre à :
- positionner (202) une minuterie de transport de la couche MAC fondée sur la minuterie RTO ;
- déterminer (204) si la minuterie de transport a expiré ; et
- déterminer le moment d'expiration de la minuterie de transport comme étant le moment auquel le segment ACK est transporté.

3. Procédé de commande de transport selon la revendication 2, pour lequel le moment d'expiration de la minuterie de transport a lieu plus tôt que le moment d'expiration de la minuterie RTO.

4. Procédé de commande de transport selon la revendication 3, pour lequel la minuterie RTO est remise à zéro au moment où expire la minuterie de transport.

5. Procédé de commande de transport selon la revendication 1, pour lequel ladite fonction de contrôle de congestion est mise en oeuvre par une couche de protocole de commande de transmission, TCP, en utilisant la minuterie RTO et pour lequel la couche MAC effectue la détection du segment ACK en réponse au segment de données transmis par la couche TCP.

6. Procédé de commande de transport selon la revendication 5, pour lequel la réalisation du contrôle de flux comprend les étapes consistant à :
- détecter ledit débit moyen de transmission de la couche TCP ; et
- transporter (209) le segment ACK à la couche TCP au débit moyen de transmission.

7. Procédé de commande de transport selon la revendication 6, pour lequel le transport du segment ACK comprend les étapes consistant à :
- comparer le débit de réception du segment ACK reçu au débit moyen de transmission ;
- si le débit de réception est supérieur au débit moyen de transmission, transporter les segments ACK correspondant au débit moyen de transmission à la couche TCP et stocker les segments ACK restants ; et
- si le débit de réception est inférieur au débit moyen de transmission, transporter les segments ACK stockés à la couche TCP.

8. Procédé de commande de transport selon la revendication 7, pour lequel le transport des segments ACK stockés à la couche TCP comprend les étapes consistant à :
- déterminer (204) si une minuterie de transport pré-positionnée a expiré ; et
- transporter (205) au moins un des segments ACK stockés à la couche TCP au moment où expire la minuterie de transport.

9. Procédé de commande de transport selon la revendication 8, pour lequel la minuterie de transport expire plus tôt que la minuterie RTO.

10. Émetteur d'un système de communication sans fil, l'émetteur comprenant une couche de transport, dans lequel la couche de transport est dotée d'une fonction de contrôle de congestion pour transmettre des données sur la base de segments et retransmettre un segment si une minuterie de temporisation de retransmission, RTO, expire avant la réception d'un segment d'accusé de réception, ACK, en réponse à la transmission du segment, et comprenant en outre une couche de commande d'accès au support, MAC, pour détecter la réception d'un segment ACK par une liaison sans fil et transporter, par l'émetteur, le segment ACK détecté à la couche de transport, dans lequel l'émetteur comprend :
- des moyens pour réaliser un contrôle de flux des segments ACK reçus dans la couche MAC de l'émetteur ;
- des moyens pour transporter au moins un des segments ACK, dont le flux a été contrôlé, à la couche de transport ; et
- des moyens pour remettre à zéro une minuterie RTO suivant le segment ACK reçu depuis la couche MAC dans la couche de transport,
- dans lequel les moyens de réalisation du contrôle de flux comprennent :
- des moyens pour stocker temporairement (208) les segments ACK reçus dans une couche MAC ;
- des moyens pour détecter un débit moyen de transmission des segments de données ; et
- des moyens pour transporter (209) les segments ACK stockés à une couche de transport au débit moyen de transmission.

11. Émetteur selon la revendication 10, adapté à opérer suivant un des procédés des revendications 2 à 9.
